# EUROPÄISCHE PATENTSCHRIFT

(11) **EP 2 810 823 B1**
(45) Veröffentlichungstag und Bekanntmachung des Hinweises auf die Patenterteilung: **11.07.2018**
(21) Anmeldenummer: 14168146.0
(22) Anmeldetag: 13.05.2014
(51) Int. Cl.: B60P 3/20, B60H 1/00, B60H 1/32

(54) **Transportfahrzeug mit kontrollierter Laderaumtemperatur**
Transport vehicle with controlled loading space temperature
Véhicule de transport avec espace de rangement à température contrôlée

(30) Priorität: 03.06.2013 DE 202013004990 U; 04.06.2013 DE 202013005047 U; 03.09.2013 DE 202013007782 U; 24.09.2013 DE 202013008472 U
(43) Veröffentlichungstag der Anmeldung: 10.12.2014
(73) Patentinhaber: FBS Fahrzeugnachrüstung GmbH, 60326 Frankfurt am Main (DE)
(72) Erfinder: Grueneberg, Claus, 65779 Kelkheim (Taunus) (DE)
(74) Vertreter: WSL Patentanwälte Partnerschaft mbB

(56) Entgegenhaltungen:
- EP-A1- 0 323 196
- DE-U1-202011 005 395
- US-A- 4 432 213
- US-A- 5 671 609

## Beschreibung

Die vorliegende Erfindung betrifft ein Transportfahrzeug zum Transport von temperatursensiblen Gütern, wie Arzneimittel, Lebensmittel, wie insbesondere Schokolade und Pralinen, Kosmetika oder Pflanzen, oder elektronische Bauteile, welche in einem vorbestimmten konstanten Temperaturbereich, der einen maximalen Bereich von im Wesentlichen +5°C bis +30°C, bevorzugt von im Wesentlichen +15°C bis +25°C umfasst, transportiert werden müssen.

Der Transport bestimmter Güter, wie Nahrungsmittel, Arzneimittel, elektronische Bauteile, etc. erfordert einen bestimmten Temperaturbereich, der während des Transports der Güter eingehalten werden muss oder soll, wobei es unterschiedliche Temperaturbereiche gibt. Solche Temperaturbereiche sind beispielsweise der Tiefkühlbereich, der für tiefgekühlte Lebensmittel eingehalten werden muss, oder auch ein Bereich, in dem Kühlkost transportiert wird.

Das Dokument DE 20 2011 005 395 U1 offenbart ein Transportfahrzeug mit einem akklimatisierten Raum.

Gemäß einer im März 2013 veröffentlichten und im September 2013 in Kraft getretenen Richtlinie der Europäischen Union für die Vertriebspraxis von Humanarzneimitteln müssen Arzneimittel während des gesamten Transportes innerhalb der vom Hersteller auf der äußeren Hülle angegebenen Temperaturgrenzen gehalten werden. Konkret bedeutet dies, dass die erforderlichen Lagerbedingungen für Arzneimittel während des gesamten Transports des Arzneimittels ohne Unterbrechung in diesem Temperaturbereich vorherrschen müssen. Folgende Temperaturbereiche werden unterschieden:
- "Tiefgekühlt": unterhalb von -15°C;
- "Kühlschrank": zwischen +2° und +8°C;
- "Kalt oder Kühl": zwischen +8° und +15°C;
- "Raumtemperatur": zwischen +15° und +25°C.

Die vorliegende Erfindung soll für einen maximalen Temperaturbereich von +2°C bis +30°C geeignet sein und besonders für den Temperaturbereich "Raumtemperatur" geeignet sein, d. h. dass sich das transportierte Gut in einem Temperaturbereich von zwischen +15° und +25°C befinden muss.

Maßgeblich sind gemäß Richtlinie die Faktoren: Temperatur am Produkt, maximale bzw. minimale Außentemperatur (in Deutschland statistische Werte von -20°C bis zu +40°C) sowie das Volumen des Laderaums.

Neben Arzneimitteln ist die vorliegende Erfindung für eine Reihe weiterer Güter geeignet, wie beispielsweise Lebensmittel wie Schokolade und Pralinen, oder auch Blumen. Auch temperatursensible Elektronik fällt in den Anwendungsbereich. Grundsätzlich eignet sich die vorliegende Erfindung für alle Güter, die in dem Temperaturbereich von +2°C und +30°C transportiert werden müssen oder sollen, welcher die drei oben angegebenen Temperaturbereiche von zusammen +2°C bis +25°C umfasst, um einerseits bestimmte Normen zu erfüllen und andererseits Qualitätseinbußen oder Beschädigungen bei zu hohen oder zu tiefen Temperaturen zu vermeiden.

Als Transportmittel dienen Kraftfahrzeuge, die eine Fahrerkabine oder -zelle und einen geschlossenen Laderaum aufweisen, der in der Regel sowohl von der Rückseite des Fahrzeugs als auch gegebenenfalls seitlich durch entsprechende Türen erreichbar bzw. begehbar ist, zum Be- und Entladen der Transportgüter. Dieser Laderaum wird durch die Karosserie und/oder einen Aufbau, z. B. einen Kastenaufbau, gebildet. Derartige Fahrzeuge besitzen im Bereich des Laderaums bzw. des Kastenaufbaus in der Regel zwei Radkästen oder Radhäuser für die Hinterräder.

Derartige Transportfahrzeuge können mit einer Kälte- und Wärmeanlage mit elektronischer Temperaturregelung beispielsweise einer Klimaanlage zum Kühlen und einer Heizung zum Erwärmen ausgestattet sein, die, geregelt durch Erfassung der Temperatur im Laderaum, eine entsprechende Temperierung der Luft im Laderaum vornehmen können. Befindet sich die Temperatur im Laderaum auf einem zu hohen Wert, beispielsweise im Sommer, wird die Luft gekühlt, wohingegen bei sehr niedrigen Temperaturen, beispielsweise im Winter bei Temperaturen unter 0°C, eine entsprechende Erwärmung der Laderaumluft notwendig ist.

Mittels einer Luft-Temperiereinrichtung mit ventilierender Funktion bzw. einem Kühl-Wärme-Ventilationssystem, die bzw. das ein Bestandteil der Kälte- und Wärmeanlage ist, wird die entsprechend temperierte Luft in den Laderaum eingeblasen, wobei insbesondere bei gefülltem Laderaum nur eine unzureichende Verteilung der temperierten Luft erfolgt. Es können sich "Windschatten" und Bereiche im Laderaum ergeben, die von der temperierten Luft nicht erreicht werden, so dass sich unterschiedliche unkontrollierte Temperaturzonen einstellen können, die einen in einem bestimmten Temperaturbereich gesicherten Transport aller im Laderaum befindlicher Transportgüter nicht gewährleistet.

Zudem können sich kurzzeitig erhebliche Temperaturunterschiede in unterschiedlichen Zonen des Laderaums dadurch einstellen, dass beim wiederholten Beladen und Entladen, beispielsweise beim Verteilen von Arzneimitteln zu den einzelnen Apotheken, durch Öffnen der großflächigen Türen schlagartig Umgebungsluft eindringt, deren Temperatur gegebenenfalls weit außerhalb des im Laderaum eingestellten Temperaturbereichs liegt. Man kann sich leicht vorstellen, welche nachteiligen Effekte bei großer Sommerhitze oder strengem Frost entstehen können.

Aus dem Stand der Technik sind temperaturgeführte Transporte in Tiefkühl- bzw. Thermofahrzeugen bekannt. Solche Fahrzeuge weisen aufwändige Wärmedämmeinrichtungen und entsprechend umfangreiche sehr aufwändige und viel Energie verbrauchende Kühleinrichtungen auf, wobei auch bei diesen bei stark gefülltem Laderaum eine konstante Einhaltung des vorgesehenen Temperaturbereichs im gesamten Laderaum nicht sichergestellt werden kann.

Andererseits können sich bei Fahrzeugen ohne Klimaeinrichtungen erhebliche Temperaturunterschiede durch Wärme- oder Kältenester ergeben, die einen gesicherten Transport im Raumtemperaturbereich verhindern. Diese sind auch unter den Umständen nicht geeignet, in denen die Türen des Laderaums häufig geöffnet werden müssen, wie dies beispielsweise bei Auslieferungsfahrten an Apotheken der Fall ist.

Der vorliegenden Erfindung liegt deshalb die Aufgabe zugrunde, ein Transportfahrzeug zum Transport von temperatursensiblen Gütern zu schaffen, die in einem frei wählbaren und/oder vorbestimmten im Wesentlichen konstanten Temperaturbereich, der einen maximalen Bereich von im Wesentlichen +5°C bis +30°C, bevorzugt von im Wesentlichen +15°C bis +25°C (Raumtemperaturbereich) umfasst, transportiert werden sollen oder müssen, wobei das Transportfahrzeug einfach aufgebaut und damit kostengünstig sein soll.

Diese Aufgabe wird durch die Merkmale des Patentanspruchs 1 gelöst.

Erfindungsgemäß zeichnet sich das Transportfahrzeug dadurch aus, dass pro Radkasten eine Radkastenverkleidung vorgesehen ist, die eine Seitenwand, eine obere Abdeckwand, eine vordere Stirnwand und eine hintere Stirnwand, wenigstens eine Lufteintrittsöffnung und wenigstens eine Luftaustrittsöffnung, und wenigstens einen Lüfter oder Ventilator aufweist, der sich in oder an der wenigstens einen Lufteintrittsöffnung (11, 13) oder an der wenigstens einen Luftaustrittsöffnung (15) befindet und zur Umwälzung der Luft im Laderaum dient. Mittels dieser Radkastenverkleidung wird erreicht, dass die sich im Laderaum befindliche Luft konstant umgewälzt und weiter - sofern notwendig - mittels des Kühl-Wärme-Ventilationssystems ständig weiter temperiert werden kann, wodurch ein langfristig einzuhaltender Temperaturbereich sichergestellt werden kann.

Durch die im gesamten Laderaum zwangsumgewälzte Luft werden alle Bereiche des Laderaums, insbesondere auch bei voll gefülltem Laderaum erreicht, wodurch "Temperaturnester", deren Temperatur außerhalb des einzustellenden Temperaturbereichs liegen, vermieden werden können und wodurch eine Vergleichmäßigung der Temperatur im Laderaum erreicht wird. Weiter wird erfindungsgemäß sichergestellt, dass nach einer Öffnung der Laderaumtür die temperierte Luft schnellstmöglich im Laderaum wieder verteilt wird.

Die Radkastenverkleidung weist eine Seitenwand auf, die entlang der Fahrzeugachse angeordnet ist, wobei die für einen Kasten notwendige zweite Seitenwand durch die Innenseite der Fahrzeugseitenwand gebildet wird, die entweder durch die Karosserie oder eine Seitenwandverkleidung gebildet wird. Die obere Abdeckwand deckt die Radkastenverkleidung auf der Oberseite ab. Den Boden der Radkastenverkleidung bildet der Boden des Fahrzeugs bestehend entweder aus dem Karosserieboden oder einem zusätzlichen im Wesentlichen ebenen Laderaumboden.

Mit vorderer Stirnwand ist die in Fahrtrichtung des Fahrzeugs vordere Stirnwand gemeint und mit hinterer Stirnwand, die Stirnwand, die zur Rückseite des Fahrzeugs zeigt.

Die erfindungsgemäße Radkastenverkleidung weist erfindungsgemäß wenigstens eine Lufteintrittsöffnung und wenigstens eine Luftaustrittsöffnung auf und wenigstens einen Lüfter oder Ventilator, mit Hilfe dessen Luft aus dem Laderaum in die Radkastenverkleidung eingesogen und durch die Luftaustrittsöffnung wieder ausgebracht werden kann, wodurch der Lüfter in der Lage ist, einen Luftstrom und damit eine Umwälzung der Luft im Laderaum zu erzeugen.

Die Radkastenverkleidung dient zur Abdeckung wenigstens eines Radkastens bzw. Radhauses der Räder der Hinterachse des Fahrzeugs, der bzw. das in den Laderaum vorsteht.

Vorteilhafterweise ist die vorliegende Erfindung sowohl für Transportfahrzeuge mit einer Klimaanlage als auch ohne geeignet. Ist keine Klimaanlage vorhanden, ergibt sich ein entsprechend eingeschränkter Temperaturbereich.

Durch die kastenförmige Struktur werden zusätzlich weitere Vorteile erreicht. Bekanntlich weisen Radkästen eine kreisbogenförmige Kontur im Laderaum der betrachteten Kraftfahrzeuge auf, welche verhindert, dass auf ihm Güter im Laderaum abgelegt werden können. Durch die erfindungsgemäße Radkastenverkleidung wird mittels der oberen Abdeckwand eine Ablagefläche geschaffen, auf der Transport- bzw. Ladegüter aufgestapelt werden können.

Weiterhin ergibt sich der Vorteil, dass durch die großflächige Seitenwand eine gerade und ebene Fläche geschaffen wird, an der die zu beladenden und entladenden Güter entlang geschoben werden können und nicht am Radkasten hängen bleiben. Wie bekannt, sind Lieferdienste, insbesondere Lieferverteildienste, wie dies bei Arzneimitteln oder sonstigen Paketen, verderblichen Produkten und dergleichen der Fall ist, einem großen Zeitdruck ausgesetzt und muss die Verteilung der Produkte, insbesondere der Arzneimittel so schnell wie möglich erfolgen. Aus diesem Grunde ist besonders vorteilhaft, wenn beim Be- und Entladen der Transportfahrzeuge die innere Struktur des Laderaums die schnelle Handhabung unterstützt. Zusätzlich ergibt sich der Vorteil, dass das Radhaus vor Beschädigungen geschützt werden kann.

Weiterhin ist vorteilhaft, dass das Kühl-Wärme-Ventilationssystem in der Nähe der Trennwand zwischen Fahrerzelle und Laderaum oder in der Nähe der Heckwand angeordnet ist. Insbesondere, wenn das Kühl-Wärme-Ventilationssystem nah unterhalb des Himmels des Laderaums angeordnet ist ergibt sich der Vorteil einer entsprechenden Distanz zur Radkastenverkleidung wodurch eine Vergleichmäßigung der Luftumwälzung im Laderaum gefördert wird.

Eine Bauweise von existierenden Transportfahrzeugen ist, das der Laderaum eine rahmenförmige Struktur aufweist mit Verstärkungs- bzw. Tragholmen in den Seitenwänden und/oder im Fahrzeughimmel. Durch diese Verstärkungs- bzw. Tragholme ergeben sich an den Wänden und/oder am Himmel Barrieren für den umzuwälzenden Luftstrom und eine Beeinträchtigung der Vergleichmäßigung der im Laderaum herrschenden Temperatur. Erfindungsgemäß sind die rahmenförmige Struktur und die Verstärkungs- bzw. Tragholme von einer Innen-Abdeckung überdeckt, wodurch eine glatte Innenfläche der Seitenwände und/oder des Himmels des Laderaums geschaffen wird. Dadurch kann die Luft praktisch ungehindert entlang der Seitenwände und des Himmels strömen. Mit anderen Worten, die im Laderaum befindlichen Güter werden mehr oder weniger von einem Luftmantel umströmt. Innerhalb des Luftmantels herrscht der gewünschte Temperaturbereich und von außen kann eine nicht passende Temperatur nicht nach innen dringen.

Weiterhin ist vorteilhaft, dass beim erfindungsgemäßen Transportfahrzeug zwischen der rahmenförmigen Struktur und der Innen-Abdeckung des Laderaums Wärmedämmmaterial angeordnet sein kann, wobei bevorzugt auch Hohlräume in den Tragholmen mit Wärmedämmmaterial gefüllt sind. Die Notwendigkeit einer zusätzlichen Dämmung hängt wesentlich vom Einsatzort bzw. der Einsatzregion des erfindungsgemäßen Transportfahrzeugs ab.

Weiterhin ergibt sich der Vorteil, dass durch die großflächige Seitenwand der Radkastenverkleidung eine gerade und ebene Fläche geschaffen wird, an der die zu beladenden und entladenden Güter entlang geschoben werden können und nicht am Radkasten hängen bleiben. Wie bekannt, sind Lieferdienste, insbesondere Lieferverteildienste, wie dies bei Arzneimitteln oder sonstigen Paketen, verderblichen Produkten und dergleichen der Fall ist, einem großen Zeitdruck ausgesetzt und muss die Verteilung der Produkte, insbesondere der Arzneimittel so schnell wie möglich erfolgen. Aus diesem Grunde ist besonders vorteilhaft, wenn beim Be- und Entladen der Transportfahrzeuge die innere Struktur des Laderaums die schnelle Handhabung unterstützt. Zusätzlich ergibt sich der Vorteil, dass das Radhaus vor Beschädigungen geschützt werden kann.

Weiterhin ist vorteilhaft, dass das Transportfahrzeug wenigstens eine Luftdruckausgleichsklappe im Laderaum des Transportfahrzeugs aufweist, welche zum Druckausgleich im Laderaum, insbesondere beim schnellen Schließen der Laderaumtür dient. Insbesondere das schnelle Schließen des Laderaums und vorzugsweise mit nur einer Hand des Benutzers, der in der anderen Hand die auszuliefernde Ware hält, ist zur Aufrechterhaltung der Laderaumtemperatur je nach Umgebungstemperatur gegebenenfalls sehr wichtig, um den eingestellten Temperaturbereich im Laderaum nicht zu verlassen. Der beim schnellen Schließen einer Laderaumtür sich ergebende erhöhte Innendruck im Laderaum kann durch die Luftdruckausgleichsklappe entsprechend ausgeglichen werden.

In vorteilhaft einfacher Weise kann die Luftdruckausgleichsklappe in Form einer flexiblen Lasche ausgebildet sein.

Vorteilhafterweise ist der wenigstens eine Lüfter oder Ventilator an der Innenseite der Lufteintrittsöffnung angeordnet. Damit wird ein wirksames Einsaugen der Luft ermöglicht, wodurch die Luftumwälzung im Laderaum unterstützt wird.

Alternativ kann der wenigstens eine Lüfter oder Ventilator der Radkastenverkleidung an der Innenseite der Wand im Bereich der wenigstens einen Luftaustrittsöffnung der Radkastenverkleidung angeordnet sein. Damit wird ein wirksames Ausbringen der eingesaugten Luft in Form eines relativ gerichteten Luftstrahls ermöglicht, was die Luftumwälzung im Laderaum unterstützt.

Mit Vorteil ist die wenigstens eine Lufteintrittsöffnung in einer der beiden Stirnwände der Radkastenverkleidung, in der die Luftaustrittsöffnung nicht angeordnet ist, oder in der oberen Abdeckwand benachbart zu einer der beiden Stirnwände, in der die Luftaustrittsöffnung nicht angeordnet ist, angeordnet.

Dabei ist vorteilhaft, dass die wenigstens eine Luftaustrittsöffnung sich so nahe wie möglich an der benachbarten Wand des Transportfahrzeugs befindet. Dadurch wird ein im Wesentlichen ungehindertes Strömen der umgewälzten Laderaumluft entlang der Innenwand des Laderaums ermöglicht und eine Verhinderung des Strömens durch Ladegut deutlich vermieden.

Vorteilhafterweise befindet sich der wenigstens eine Lüfter oder Ventilator der Radkastenverkleidung sich im Bereich der Lufteintrittsöffnung oder im Bereich der Luftaustrittsöffnung.

Vorteilhafterweise weist die Radkastenverkleidung der vorliegenden Erfindung eine Mehrzahl von Lufteintritts- und Luftaustrittsöffnungen sowie eine Mehrzahl von Lüftern und Ventilatoren auf, wodurch eine entsprechend große Luftmenge umgewälzt werden kann. Die Anzahl der Luftöffnungen und die Anzahl der Lüfter oder Ventilatoren bestimmt sich im Wesentlichen einerseits durch das Laderaumvolumen selbst und andererseits durch die Temperaturbedingungen, nämlich der Innentemperatur im Laderaum des Transportfahrzeugs und der herrschenden Außentemperatur. Je größer diese Unterschiede sind, desto schneller sollte die Luft im Laderaum umgewälzt werden können, um eventuell auftretende Temperaturunterschiede im Laderaum so schnell wie möglich wieder auszugleichen. Die Umwälzleistung kann somit flexibel angepasst werden, wobei sie im Wesentlichen von der Laderaumgröße abhängt.

In einer alternativen Ausführungsform befindet sich zwischen der wenigstens einen Lufteintrittsöffnung und der wenigstens einen Luftaustrittsöffnung eine die Luft führende rohr- oder schlauchförmige Luftleitung, in der der wenigstens eine Lüfter oder Ventilator angeordnet ist. Dadurch kann ein besonders zielgerichteter Luftstrom in der Radkastenverkleidung erzeugt werden und durch die Geometrie der Radkastenverkleidung in Zusammenhang mit dem Radkasten selbst können etwaige auftretende Luftverwirbelungen, die eine Verlangsamung des Luftstroms einerseits und eine höhere Ventilator bzw. Lüfterleistung andererseits erfordern, verringert bzw. vermieden werden.

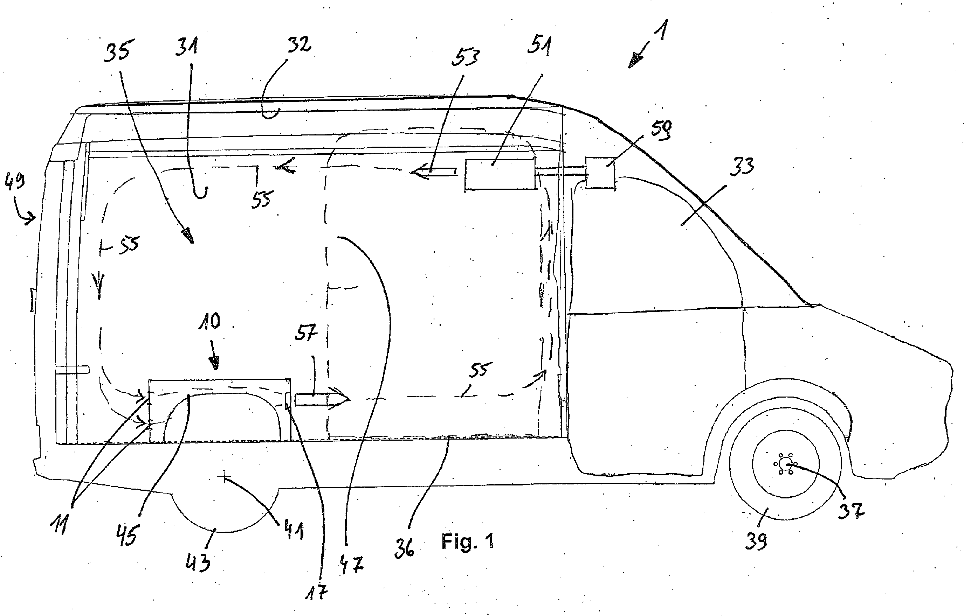

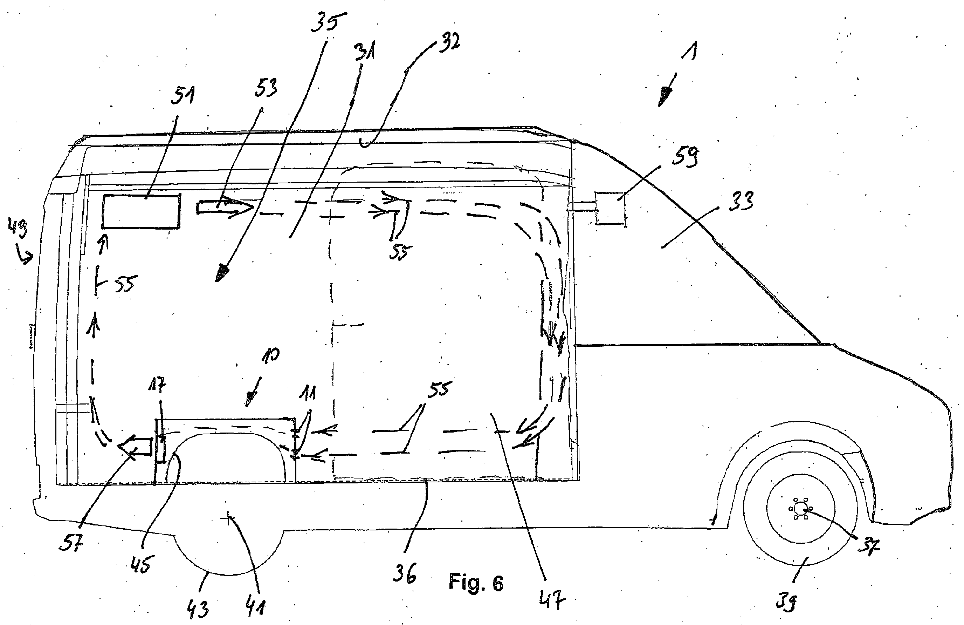

Die Luftbewegung der erfindungsgemäßen Einrichtung erfolgt grundsätzlich entgegen der Richtung der Luftbewegung, die durch eine im Laderaum beispielsweise unterhalb dessen Himmels angeordnete Temperiereinrichtung mit ventilierender Funktion bzw. ein Kühl-Wärme-Ventilationssystem des Transportfahrzeugs erzeugt wird. Ist dieses hinter der Fahrerzelle angeordnet so wird die von dem Kühl-Wärme-Ventilationssystem in Richtung Heck des Fahrzeuges gerichtete Luft wieder unten nach vorne zurückgefördert und steigt anschließend zum Kühl-Wärme-Ventilationssystem auf (Fig. 1). Ist das Kühl-Wärme-Ventilationssystem unterhalb des Himmels im Heckbereich der Fahrzeugs angeordnet, welches die Luft in Fahrtrichtung oben nach vorne bewegt, so fördert die erfindungsgemäße Einrichtung von vorne unten wieder nach hinten unten, wo die Luft wieder nach oben zum Kühl-Wärme-Ventilationssystem hochsteigt (Fig. 6).

Das Kühl-Wärme-Ventilationssystem kann sich auch in einem mittleren oder unteren Bereich des Laderaums befinden.

Vorteilhafterweise ist in der einen alternativen Ausführungsform die wenigstens eine Lufteintrittsöffnung in der hinteren Stirnwand oder in der oberen Abdeckwand benachbart zur hinteren Stirnwand angeordnet, wodurch vorteilhafterweise die Luft im hintersten Bereich des Laderaums angesaugt wird und wieder nach vorne bewegt wird.

In der alternativen Ausführungsform ist die Lufteintrittsöffnung in der vorderen Stirnwand oder in der oberen Abdeckwand benachbart zur vorderen Stirnwand angeordnet, was dazu dient, die Luft von vorne nach hinten zu bewegen.

Vorteilhafterweise wird mittels des wenigstens einen Lüfters oder Ventilators je nach Ausführungsform eine Umwälzung der Luft im Laderaum von hinten nach vorne oder umgekehrt erzeugt, wodurch sich ein kontinuierlicher Luftstrom im Laderaum erzeugen lässt. In vielen Fällen befindet sich hinter der Fahrerzelle des Transportfahrzeugs unterhalb der Laderaumoberseite bzw. dem Laderaumhimmel das Kühl-Wärme-Ventilationssystem, durch das temperierte Luft in den Laderaum eingeblasen wird und zwar entlang der des Himmels des Laderaums nach hinten. Die nach hinten geblasene Luft wird somit aktiv wieder nach vorne zurückgeführt und erreicht erneut das Kühl-Wärme-Ventilationssystem, das gegebenenfalls eine weitere Temperierung der angesaugten Luft vor dem erneuten Ausstoß in den Laderaum vornimmt. Die Temperaturregelung erfolgt mit Hilfe einer elektronischen Steuerung bzw. Regelung.

Bei manchen mit Heiz-Klimaanlage ausgerüsteten Fahrzeugen befindet sich das Kühl-Wärme-Ventilationssystem im Heckbereich des Fahrzeugs oberhalb der Hecktür(en). Dann wird die Luft von der erfindungsgemäßen Einrichtung in Form der Radkastenverkleidung von vorne nach hinten befördert. Auch andere Anordnungen beispielsweise an der Seite sind denkbar.

Um zu verhindern, dass Fremdkörper in das Innere der Radkastenverkleidung eindringen können, kann in bzw. an der wenigstens einen Lufteintrittsöffnung und/oder in bzw. an der wenigstens Luftaustrittsöffnung eine Gittereinrichtung angeordnet sein.

Vorteilhafterweise sind die Seitenwand, die obere Abdeckwand, die vordere Stirnwand und/oder die hintere Stirnwand der Radkastenverkleidung aus einer beschichteten Holzwerkstoffplatte gebildet, was zudem den Vorteil eines geringen Gewichts der Radkastenverkleidung mit sich bringt. Dadurch wird die verfügbare Gewichtszuladung im Laderaum nur geringfügig eingeschränkt. Bei zusätzlicher Bodenwand ist diese vorteilhafterweise aus demselben Material gebildet. Alternative Materialien sind Platten aus Vollholz, Kunststoff, wie Duro- oder Thermoplaste, Polypropylen, GfK oder aus Metall.

Das erfindungsgemäße Transportfahrzeug weist auf seinem Karosserieboden einen im Wesentlichen ebenen zusätzlichen Laderaumboden in Form einer oder mehrerer ebener Platten auf. Diese Platten ruhen beispielsweise auf den erhabenen Teilen des Karosseriebodens, zwischen denen Sicken ausgebildet sind und mit Luft gefüllt sind.

Transportfahrzeuge sind in Europa Fahrzeuge mit Dieselmotoren. Im Rahmen der Abgasreduzierung einschließlich Feinstaub müssen Dieselfahrzeuge Rußpartikelfilter aufweisen. Ein Rußpartikelfilter hat häufig eine Betriebstemperatur von rund 800°C. Zu gegebenen Zeiten werden die in ihm gesammelten Partikel verbrannt, um den Filter zu reinigen, was zu Temperaturen von 1.400°C führen kann. Derartige Aggregate, zu denen auch der Motor des Fahrzeugs und weitere wärmeabgebende Aggregate gehören, erwärmen die Karosserie in und um ihren Anbringungsort. Aufgrund der Metallkonstruktion eines Fahrzeuges ergibt sich eine hohe Wärmeleitung der Metallteile. So erwärmt selbst ein unter und/oder in der Nähe des Motorraumes montiertes Aggregat die Karosserie und diese führt zur Erwärmung des Laderaums. Umso mehr ergibt sich ein Wärmeeinfluss zu dem Laderaum, je näher ein entsprechendes Aggregat an diesem angeordnet ist. Eine solche Erwärmung kann zu einer nicht adäquaten Temperaturabweichung der Laderaumatmosphäre im Laderaum führen, was bei dem Transport von temperatursensiblen Produkten nicht erwünscht ist und vermieden werden muss.

Bisher sind Lösungen bekannt geworden, die an, vor und/oder neben der Wärmequelle für eine Dämmung der Wärmeeinflüsse sorgen sollen. Als Lösungen wurden bisher Abschirmungen in der Nähe des Aggregates oder Bauteils in Form von Wärmeschutzschilden, Dämmungen und Schutzfolien eingesetzt. Sie haben sich jedoch als nicht ausreichend erwiesen, weil sie die Wärmeleitung der Metallteile nicht verhindern können und weil sie teils nicht in genügender Stärke - z.B. bei Dämmmaterialien - montierbar sind, da der dafür notwendige Einbauraum nicht gegeben ist.

Gemäß der vorliegenden Erfindung wird vorgeschlagen, die Lüftungskanäle, die sich entweder durch die Längssickenstruktur des Karosseriebodens oder durch an der Unterseite des Laderaumbodens angeordnete Abstandsleisten ergeben, mittels Belüftungseinrichtungen zu belüften.

Vorteilhafterweise erfolgt die Belüftungszufuhr des Laderaumbodens in der Nähe der Trennwand zwischen Fahrerzelle und Laderaum.

Die Belüftung der Lüftungskanäle wird, wie sich herausgestellt hat, nur in einem Abstand von 0,5 bis 1 allenfalls 2 m von der Wärmequelle aus benötigt. Beispielsweise ist der Rußpartikelfilter hinter und unterhalb der Sitze in der Fahrerzelle, also sehr nahe an der Trennwand zwischen Fahrerzelle und Laderaum angeordnet. Die Belüftung der ersten Lüftungskanäle hinter der Trennwand reicht in der Regel für ein ausreichendes Ergebnis aus.

Nach den in Längsrichtung des Transportfahrzeugs hinter der Trennwand angeordneten ersten Lüftungskanälen in Form einer Sickenstruktur, sind die nächsten Kanäle gegenüber den ersten seitlich versetzt angeordnet. Die zugeführte Luft verteilt sich dabei auch seitwärts und tritt durch Längsspalte zwischen Lageraumboden und Wandaufbau des Fahrzeugs, Seitenwände und Heckwand, in den Laderaum aus.

Weiterhin ist vorteilhaft, dass die Belüftungseinrichtungen mit der Kälte- und Wärmeanlage des Transportfahrzeugs verbunden sind, wodurch temperierte Luft in die Lüftungskanäle einführbar ist.

Dadurch, dass die Radkastenverkleidung mit dem Boden des Laderaums des Kraftfahrzeugs verbunden ist, wird eine einfache und wirksame Verbindung der Radkastenverkleidung mit dem Transportfahrzeug erzeugt, und diese an einem Verrutschen im Laderaum gehindert. Die Verbindung kann darüber hinaus dem Luftabschluss des Radkastens nach unten in dem Fall dienen, in dem der Radkasten keinen eigenen Boden aufweist. Die Befestigung des Radkastens kann auf vielfältige Weise erfolgen, beispielsweise durch Verkleben mit geeigneten Klebern, durch Abdichten mittels Materialien wie Silikon, Akryl oder dergleichen bzw. auch durch Verwendung von Kompriband, mittels Bauteilen wie Winkelschienen oder Eckverbinder oder auch durch Formschlussverbindungen wie Nut und Feder, Zunge und zungenförmige Vertiefung und dergleichen.

Unter Transportfahrzeug sind im Rahmen der Erfindung nicht nur Kraftfahrzeuge zu verstehen sondern auch nicht motorgetriebene Fahrzeuge, wie beispielsweise Hänger.

Weitere Einzelheiten, Merkmale und Vorteile der vorliegenden Erfindung ergeben sich aus der nachfolgenden Beschreibung von Ausführungsbeispielen der Erfindung unter Bezugnahme auf die beigefügten Zeichnungen. Darin zeigt:
- Fig. 1: eine schematische Seiten-Teilschnittansicht einer ersten Ausführungsform des erfindungsgemäßen Transportfahrzeugs.
- Fig. 2: eine explosionsartige Darstellung der erfindungsgemäßen Radkastenverkleidung, und zwar für den Radkasten des rechten Hinterrads;
- Fig. 3: zwei Radkastenverkleidungen für beide Radkästen der hinteren Räder des erfindungsgemäßen Transportfahrzeugs, wobei die einzelnen Wandelemente in die Ebene aufgeklappt sind;
- Fig. 4a: eine Frontansicht eines Lüfters bzw. Ventilators zum Einsatz in der Radkastenverkleidung;
- Fig. 4b: eine Schnittansicht gemäß der Ebene des Pfeils A von Fig. 4a,
- Fig. 5: eine Ansicht von hinten in den geöffneten Laderaum des Transportfahrzeugs von Fig. 1;
- Fig. 6: eine schematische Seitenansicht einer zweiten Ausführungsform eines erfindungsgemäßen Transportfahrzeugs mit in dessen Laderaum angeordnetem Radkasten und Darstellung des umgewälzten Luftstroms;
- Fig. 7: eine schematische Seitenansicht einer weiteren Ausführungsform eines erfindungsgemäßen Transportfahrzeugs mit einer Belüftungseinrichtung des Laderaumbodens;
- Fig. 8: in Explosionsdarstellung einen Kanal der Belüftungseinrichtung von Fig. 7; und
- Fig.9: eine schematische Seitenansicht einer weiteren Ausführungsform eines erfindungsgemäßen Transportfahrzeugs mit einer alternativen Belüftungseinrichtung des Laderaumbodens mittels des Kühl-WärmeVentilationssystem des Transportfahrzeugs.

In den Figuren sind gleiche Elemente mit den gleichen Bezugsziffern bezeichnet.

Es wird zunächst Bezug genommen auf die Fig. 1, die - sehr schematisch - ein erfindungsgemäßes Transportfahrzeug 1 darstellt, das in üblicher Weise eine Fahrerkabine oder Fahrerzelle 33 und einen Laderaum 35 aufweist. In üblicher Weise weist das Transportfahrzeug 31 eine Vorderachse 37 mit Vorderrädern 39 und eine Hinterachse 41 mit Hinterrädern 43 auf.

Der Laderaum 35 wird begrenzt durch einen Laderaumboden 36, Seitenwänden 31 und einen Laderaumdach oder -himmel 32 sowie einer Heckwand, die durch Flügeltüren 49 gebildet wird.

Alternative Aufbauten, beispielsweise Kastenwagen und Fahrzeuge mit Kofferaufbauten sind ebenfalls von der Erfindung umfasst.

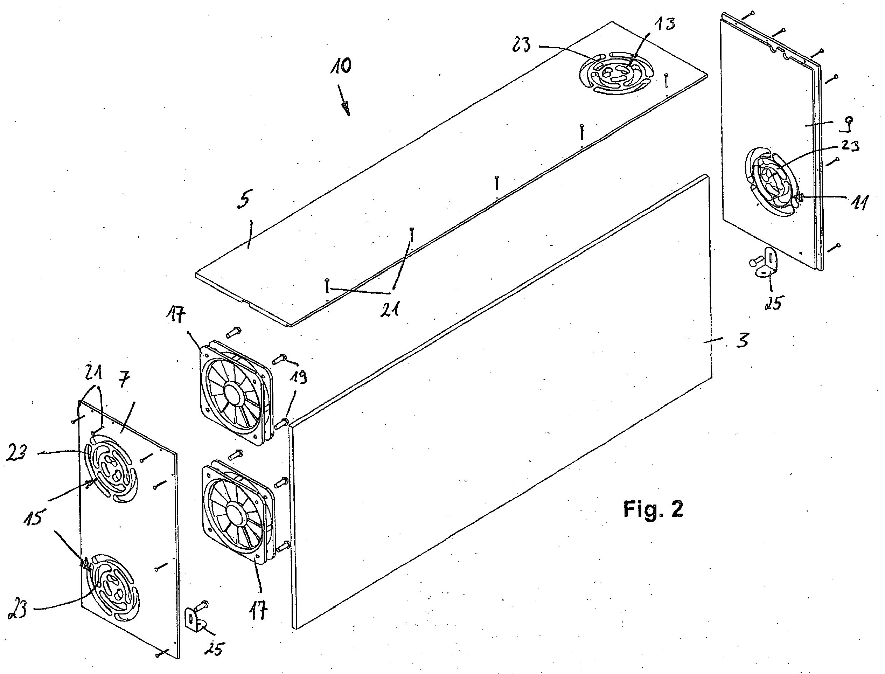

Um die Hinterräder 43 erstreckt sich in üblicher Weise auf jeder Seite des Fahrzeugs ein Radkasten 45, der in das Innere des Laderaums 35 vorspringt. Um diesen Radkasten 45 ist die erfindungsgemäße Radkastenverkleidung 10 angeordnet, welche näher unter Bezugnahme auf die Figuren 2 bis 4b beschrieben werden wird..

Der Laderaum 35 ist seitlich zugänglich durch eine Seitentür 47, die nur gestrichelt angedeutet ist, und von hinten zugänglich durch in an sich bekannter Weise angeordnete Flügeltüren 49.

Hinter der Fahrerzelle 33, die gegenüber dem Laderaum 35 durch eine Trennwand 34 abgetrennt ist, befindet sich eine Temperiereinrichtung mit ventilierender Funktion bzw. ein Kühl-Wärme-Ventilationssystem 51 einer Kälte- und Wärmeanlage mit elektronischer Temperaturregelung (nicht dargestellt), welche die aus dem Laderaum angesaugte Luft entsprechend ihrer Voreinstellung temperiert und nach hinten in den Laderaum gemäß dem Pfeil 53 ausbläst. Das Kühl-Wärme-Ventilationssystem 51 ist sowohl mit einer Heizanlage als auch mit einer Kühlanlage, beispielsweise einer Klimaanlage des Fahrzeugs verbunden. Diese angesaugte Luft nimmt dann im Wesentlichen einen Weg ein, wie er mit der gestrichelten Linie 55 angedeutet ist.

Durch Lufteintrittsöffnungen 11 in der Radkastenverkleidung 10 wird mittels eines Lüfters 17 auf der gegenüberliegenden Seite dadurch Laderaumluft angesaugt, dass der Lüfter die in der Radkastenverkleidung 10 befindliche Luft gemäß Pfeil 57 nach vorne in Richtung der Fahrerzelle 33 ausbläst. Dadurch entsteht im Innenraum der Radkastenverkleidung 10 ein Unterdruck, der durch die Luft aus dem Laderaum 35 durch Eintritt durch die Lufteintrittsöffnung 11 wieder ausgeglichen wird.

Wie aus Fig. 1 ersichtlich, ergibt sich somit eine Umwälzung der Luft im Laderaum, 35 was zu einer Vergleichmäßigung der Temperatur im Laderaum führt, sodass der gesamte Laderaum 35 sich im gewünschten Temperaturbereich befindet und die darin gelagerten Güter, insbesondere auch Arzneimittel, sich stets im gewünschten Temperaturbereich befinden.

Mit 59 wird eine Klimazusatzeinrichtung bezeichnet, die ebenfalls von dem Kühl-Wärme-Ventilationssystem 51 versorgt wird und eine entsprechende Temperierung der Fahrerzelle 33 ermöglicht.

Alternativ können in der Trennwand 34 gegebenenfalls einstellbare Lüftungsklappen vorgesehen sein, durch die temperierte Luft aus dem Laderaum in die Fahrerzelle 33 strömen kann zur entsprechenden Klimatisierung der Fahrerzelle 33.

Es wird nunmehr Bezug genommen auf die Fig. 2, 3, 4a und 4b. In Fig. 2 ist in Explosionsdarstellung eine erfindungsgemäße Radkastenverkleidung 10 dargestellt. Die Radkastenverkleidung 10 weist eine Seitenwand 3, eine obere Abdeckwand 5, eine vordere Stirnwand 7 und eine hintere Stirnwand 9 auf. Die Wandelemente 3, 5, 7 und 9 können auf einfache und auf vielfache Weise, beispielsweise durch Schrauben oder Nägel 21, Dübel, Verklinkungen wie Nut und Feder, Zunge oder zungenförmige Vertiefung, durch Kleben, Abdichten und Bauteile, wie Winkel oder Ecken miteinander verbunden werden.

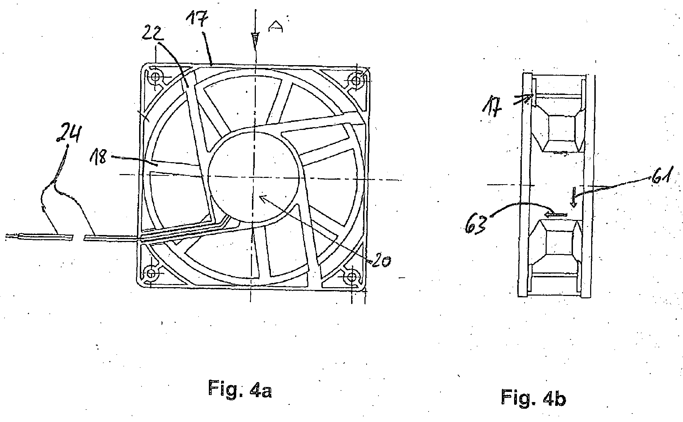

Wie aus Fig. 2 ersichtlich, weist die vordere Stirnwand 7 zwei Luftaustrittsöffnungen 15 auf, die übereinander angeordnet sind, und an die von der Innenseite der vorderen Stirnwand 7 je Luftaustrittsöffnung 15 ein Lüfter bzw. Ventilator 17 mittels Schrauben 19 oder andere geeignete Befestigungsmittel befestigt ist. Die Lüfter 17 werden weiter unten unter Bezugnahme auf die Fig. 4a und 4b näher beschrieben.

Im unteren Bereich der hinteren Stirnwand 9 ist eine Lufteintrittsöffnung 11 vorgesehen und im Bereich, benachbart zur hinteren Stirnwand 9, ist in der oberen Abdeckwand 5 ebenfalls eine Lufteintrittsöffnung 13 vorgesehen. Die Lufteintrittsöffnungen 11 und 13 sowie die Luftaustrittsöffnungen 15 sind mit Gittereinrichtungen 23 versehen, die verhindern sollen, dass Fremdkörper sowohl in das Innere der Radkastenverkleidung 1 eindringen können, als auch die Lüfter 17 beschädigen können.

Wie aus Fig. 2 weiterhin ersichtlich, weist die Radkastenverkleidung 10 eine denkbar einfache Gestalt auf, wobei der große Vorteil darin besteht, dass die einzelnen Elemente, Seitenwand, obere Abdeckwand, vordere und hintere Stirnwand aus einfachen Platten gebildet werden können, die aus einer entsprechenden Standardplattengröße zugeschnitten werden und die Platten einerseits bevorzugt aus zumindest außenseitig beschichteten Holzwerkstoffen, wie Sperrholz, bestehen können, wobei durch den flexiblen Zuschnitt eine Anpassung an praktisch alle Transportfahrzeugtypen möglich ist. Bei besonders großen Transportfahrzeugen kann es auch vorkommen, dass eine doppelte Hinterachse vorgesehen ist, sodass zwei Radkästen auf jeder Seite des Fahrzeugs vorhanden sind, die mit einer entsprechend langen Radkastenverkleidung verkleidet werden können.

In einer einfachen Ausführungsform sind wenigstens eine Eintrittsöffnung, beispielsweise die Eintrittsöffnung 11 in der hinteren Stirnwand und eine Austrittsöffnung 15 mit einem Lüfter 17 vorgesehen. Im dargestellten Ausführungsbeispiel gemäß Fig. 2 gibt es zwei Lufteintrittsöffnungen 11 und 13, zwei Luftaustrittsöffnungen 15 mit zugeordneten Lüftern 17. Wie ersichtlich, ist damit der Aufbau der Radkastenverkleidung entsprechend flexibel an die Luftumwälzaufgabe anpassbar, indem weitere Lüfter vorgesehen werden können, die die durch mehrere Lufteintrittsöffnungen eingesaugte Luft ebenfalls über eine entsprechende Vielzahl von Luftaustrittöffnungen umwälzen.

Wie weiterhin ersichtlich, kann die obere Abdeckwand 5 besonders gut als Abstützfläche zumindest in den Abschnitten, in denen keine Lufteintrittsöffnung 13 vorhanden ist, für zu lagernde Gegenstände dienen.

Als Materialalternativen können neben Holzwerkstoffen, auch Platten aus Vollholz, Kunststoff, wie Duro- oder Thermoplaste, Polypropylen, GfK oder auch aus Metall verwendet werden. Entsprechende Verbundmaterialien sind selbstverständlich auch möglich.

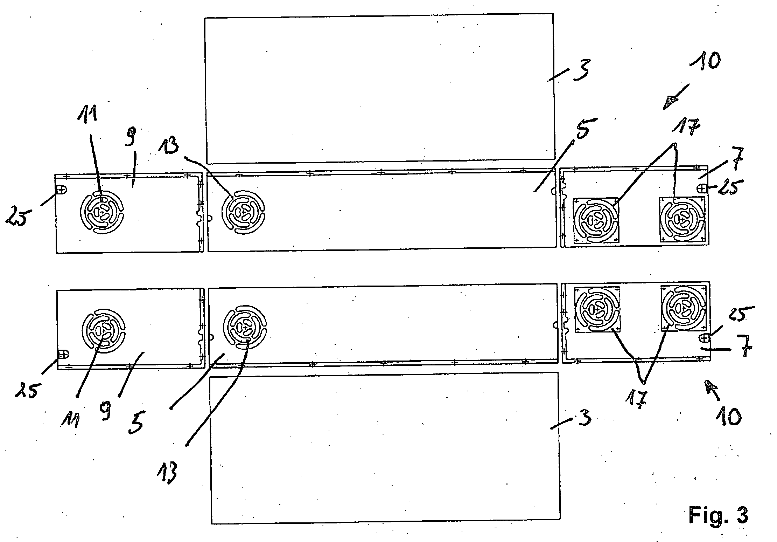

In Fig. 3 sind zwei Radkastenverkleidungen 10 in spiegelbildlicher aufgeklappter Ansicht für die beiden Radkästen im Lagerraum eines Transportfahrzeugs dargestellt, wobei es sich um die Ansicht von den Innenseiten der jeweiligen Radkastenverkleidung 10 handelt. So dient die obere Radkastenverkleidung 10 für die Verkleidung des linken, fahrerseitigen Radkastens und die untere Radkastenverkleidung 10 für den Radkasten der rechten Seite bzw. Beifahrerseite des Fahrzeugs 1.

Wie in Fig. 2 angedeutet und auch in Fig. 3 ersichtlich, sind Winkelschienen 25 vorgesehen, die durch entsprechendes Verschrauben sowohl mit den Stirnwänden 7 bzw. 9 als auch mit dem Boden des Transportfahrzeugs die Radkastenverkleidung 10 im Laderaum 35 lagern kann und ein Verrutschen von ihr verhindern.

Es wird nunmehr Bezug genommen auf die Fig. 4a und 4b, die schematisch einen Lüfter bzw. Ventilator 17 in Rückansicht (Fig. 4a) bzw. in Ansicht gemäß Ebene des Pfeiles A von Fig. 4a in Fig. 4b zeigen. Der Lüfter 17 weist in herkömmlicher Weise ein Lüfterrad 18 auf, das auf einer Nabe 20 gelagert ist, auf der sich auch ein Motor (nicht dargestellt) befindet. Die Nabe 20 ist ihrerseits in einem Rahmen 22 gelagert. Mittels einer elektrischen Leitung 24 wird der Motor 20 zum Antrieb des Lüfterrads 18 gespeist.

In Fig. 4b sind dann mit Pfeil 61 die Drehrichtung des Lüfterrads 18 und mit Pfeil 63 die Luftdurchflussrichtung angedeutet.

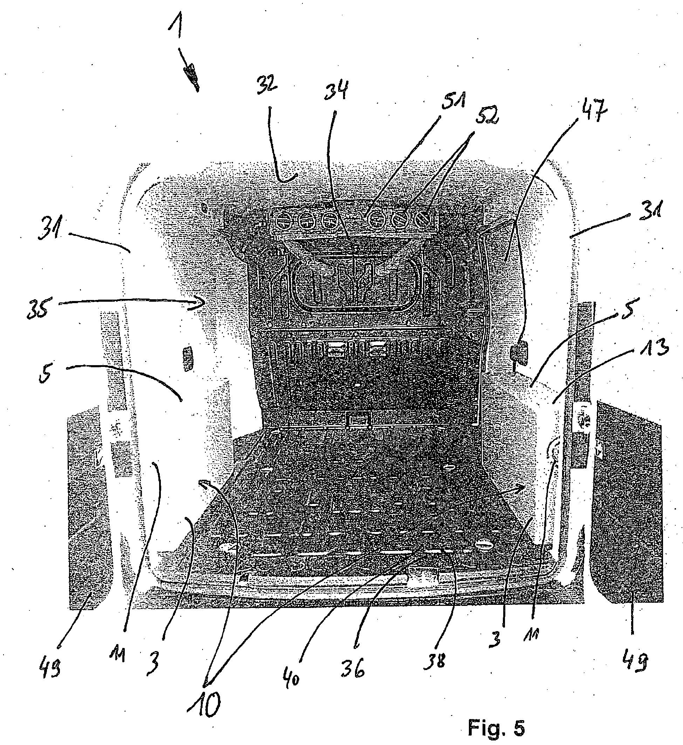

In Fig. 5 ist eine Ansicht in den Laderaum 35 eines Transportfahrzeugs 31 bei geöffneten Flügeltüren 49 und geschlossener Seitentür 47 gezeigt. Wie ersichtlich, befindet sich zwischen Fahrerzelle 33 und Laderaum 35 eine Trennwand 34. Unterhalb der Oberseite bzw. des Fahrzeughimmels 32 des Transportfahrzeugs 1 befindet sich das Kühl-Wärme-Ventilationssystem 51 mit Lüftungsschlitzen bzw. Lüftungsöffnungen 52, durch die temperierte Laderaumluft in Richtung hinterer Flügeltüren 49 geblasen wird.

Über dem linken und rechten Radkasten der Hinterachse des Transportfahrzeugs 1 ist je eine erfindungsgemäße Radkastenverkleidung 10 angebracht, wobei die Ausführungsform der erfindungsgemäßen Radkastenverkleidung 10 der nach der Fig. 2 und 3 entspricht.

Im dargestellten Beispielsfalle ist ein Laderaumboden 36 dargestellt, der dem werkseitig vom Kraftfahrzeughersteller versehenen Karosserieboden entspricht. Der Karosserieboden 36 ist reliefartig und nicht eben ausgebildet mit Erhöhungen 38 und zwischen zwei Erhöhungen 38 liegenden Vertiefungen oder Sicken 40.

Alternativ kann zum leichteren und besseren Bewegen der zu beladenden und entladenden Güter eine eine glatte, ebene Oberfläche aufweisende Bodenaufsatzplatte (nicht dargestellt), gegebenenfalls mehrteilig, vorgesehen sein, die beispielsweise aus dem selben Material wie die Radkastenverkleidung 10 gebildet ist und den Laderaumboden 36 bildet.

Der ebene einteilige oder mehrteilige Laderaumboden in Plattenform kann auf den Karosserieboden aufgesetzt werden. Dabei kommt der Laderaumboden auf den Erhöhungen 38, die im Wesentlichen untereinander die gleiche Vorsprunghöhe aufweisen, zu liegen und es bilden sich durch die Sicken 40 entsprechende Kanäle, die als Belüftungskanäle fungieren können.

Aus Fig. 5 ist weiterhin auch die glatten Innenseitenwände 31 des Laderaums 35 zu sehen, an der die umgewälzte Laderaumluft entsprechend ungehindert entlangströmen kann.

Fig. 6 zeigt eine alternative Ausführungsform zu jener von Fig. 1. Diese alternative Ausführungsform unterscheidet sich von jener gemäß Fig. 1 dadurch, dass sich das Kühl-Wärme-Ventilationssystem 51 im oberen Heckbereich des Laderaums 35 unterhalb des Laderaumhimmels 32 befindet und die gegebenenfalls temperierte Luft in Richtung Fahrerzelle 33 bzw. Trennwand 34 ausstößt. Dadurch ergibt sich ein zur Ausführungsform gemäß Fig. 1 umgekehrter Strömungsweg 55 und die umgewälzte Luft strömt in die Radkastenverkleidung/en 10 gemäß Pfeil 57 ein. Die in der Radkastenverkleidung 10 beschleunigte Luft strömt dann entlang der heckseitigen Flügeltüren 49 wieder nach oben und erreicht erneut das Kühl-Wärme-Ventilationssystem 51.

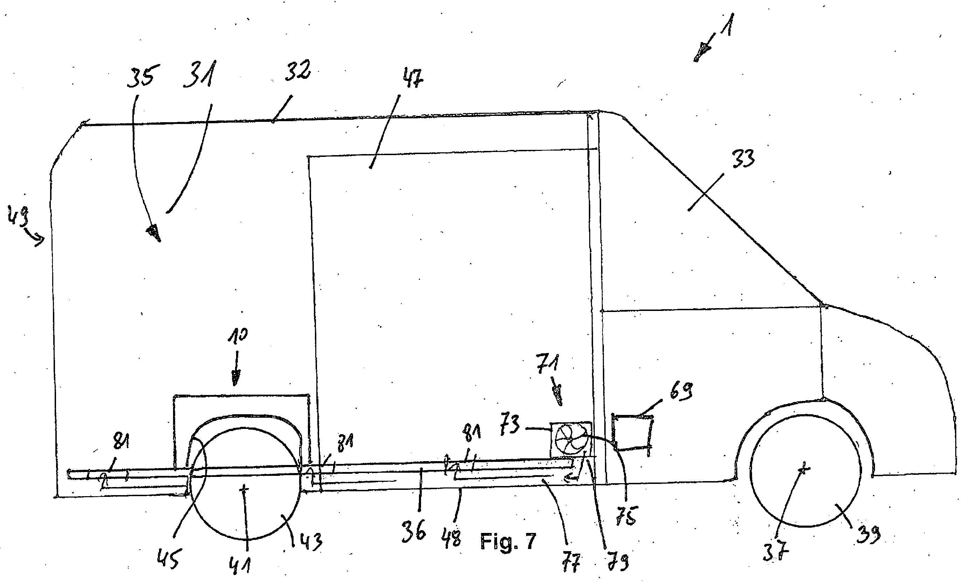

Es wird nunmehr Bezug genommen auf Fig. 7, die eine schematische Seitenansicht einer weiteren Ausführungsform des erfindungsgemäßen Transportfahrzeugs zeigt. Das Transportfahrzeug 1 weist oberhalb seines Karosseriebodens beabstandet einen Laderaumboden 36 auf, der aus einer oder mehrerer ebener Platten ausgebildet ist. Dadurch, dass der Laderaumboden auf den Erhöhungen des Karosseriebodens liegt werden durch die Sicken Lufträume geschaffen, die zur Belüftung des Laderaumbodens 36 dienen können.

Für den Fall, dass der Karosserieboden keine Sicken im Laderaum aufweist, kann der Laderaumboden auf seiner Unterseite Druck- oder Abstandsleisten gleich welchen Materials aufweisen, die nachträglich montiert oder aus der Struktur des Laderaumbodens gebildet werden. Denkbar ist auch, dass auf dem Karosserieboden nachträglich Druck- und/oder Abstandsleisten gleich welchen Materials montiert werden. Weiter ist denkbar, dass die Unterseite des auf der Oberseite planen zusätzlichen Laderaumbodens 36 so konturiert wird, dass sie Kanäle bzw. Aussparungen aufweist, wodurch ebenfalls Belüftungskanäle ausgebildet werden. Die in diesen Belüftungskanälen zirkulierende Luft dient ebenfalls der Luftzirkulation im Laderaum.

Beispielsweise befindet sich in der Fahrgastzelle 33 schematisch angedeutet ein Rußpartikelfilter 69, der aufgrund seiner erheblich Betriebstemperatur von ca. 800°C bis 1.400°C eine enorme Wärmeabstrahlung entwickelt, die durch die metallischen Komponenten der Fahrzeugkarosserie entsprechend weitergeleitet wird. Dadurch wird der Laderaum unerwünscht aufgeheizt.

Um dem entgegen zu wirken und die Wärme abzuführen ist eine Belüftungseinrichtung 71 vorgesehen, mittels der Laderaumluft über wenigstens eine Lufteintrittsöffnung 79 unter den Laderaumboden 36 eingebracht wird und von da in Richtung Heck des Fahrzeugs strömt.

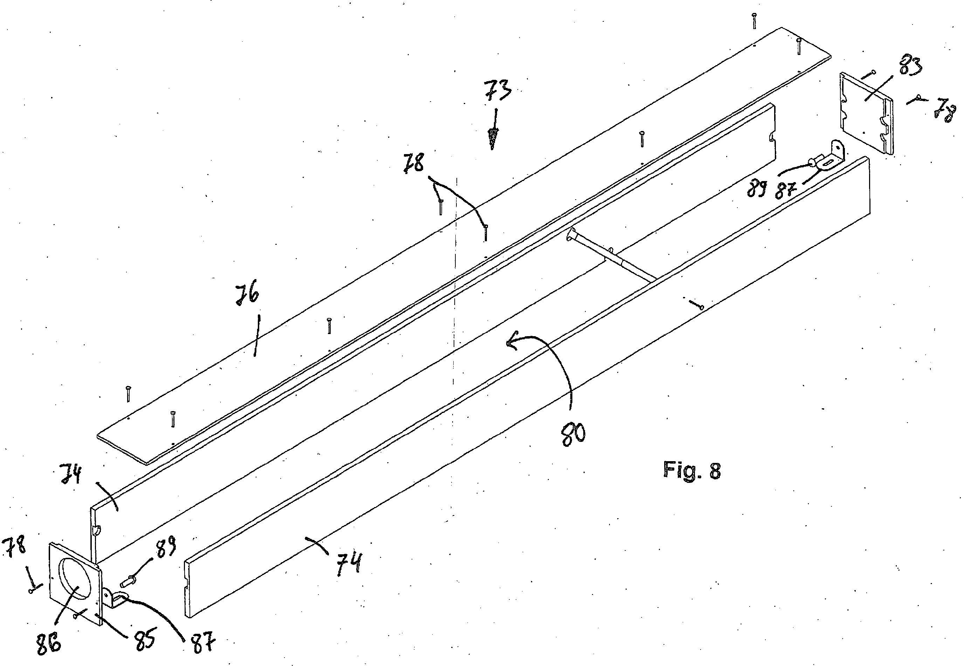

Wie aus Fig. 7 in Zusammenschau mit Fig. 8 deutlicher hervorgeht, weist die Belüftungseinrichtung 71 ein Belüftungsgehäuse 73 auf, in dem wenigstens eine Ventilationseinrichtung, beispielsweise in Form eines Trommelventilators 75 angeordnet ist. Die Laderaumluft wird über eine Öffnung 86 in einer hinteren Stirnwand des Belüftungsgehäuses 73 angesaugt und strömt in einen Kanal 80, der von zwei Längsseitenwänden 74 und einer Abdeckwand 76 sowie einer vorderen Stirnwand 83 begrenzt wird. Die Kanalelemente 74, 76, 83 und 85 sind beispielsweise durch Nägel 78 miteinander verbunden. Zur Befestigung des Kanals 80 an dem Lageraumboden 36 dienen Winkelschienen 87 und entsprechende Schrauben 89.

Alternativ oder zusätzlich zur Öffnung 86 können in der zum Laderaum hingewandten Seitenlängswand 74 Schlitze vorgesehen sein durch die Laderaumluft in den Kanal 80 eindringen und zur Eintrittsöffnung 79 weiterbefördert werden kann.

Diese strömt dann unter den Laderaumboden 36 und in Richtung Fahrzeugheck bzw. auch seitlich Richtung Seitenwände 31 des Laderaums und über schlitzartige Öffnungen oder Spalte 90 an den Rändern des Laderaumbodens 36 in den Laderaum zurück. Zusätzlich können Öffnungen 81 im Laderaumboden 36 vorgesehen sein durch die die Laderaumluft wieder in den Laderaum 35 zurückströmen kann. Diese Öffnungen 81 können auch grundsätzlich im Laderaumboden 36 oberhalb von Zurrösen (nicht dargestellt) vorgesehen sein durch die die Zurrösen zugänglich sind. Die Eintrittsöffnung 79 kann beispielsweise in Form einer U-förmigen Längsaussparung im der Trennwand 34 gegenüberliegenden Rand des Lageraumbodens 36 ausgebildet sein.

Zusätzlich zu der Ausführungsform gemäß Fig. 7 kann das erfindungsgemäße Transportfahrzeug 1 auch ein Kühl-Wärme-Ventilationssystem 51 gemäß Fig. 1 oder Fig. 6 zusätzlich zu der Belüftungseinrichtung 71 aufweisen.

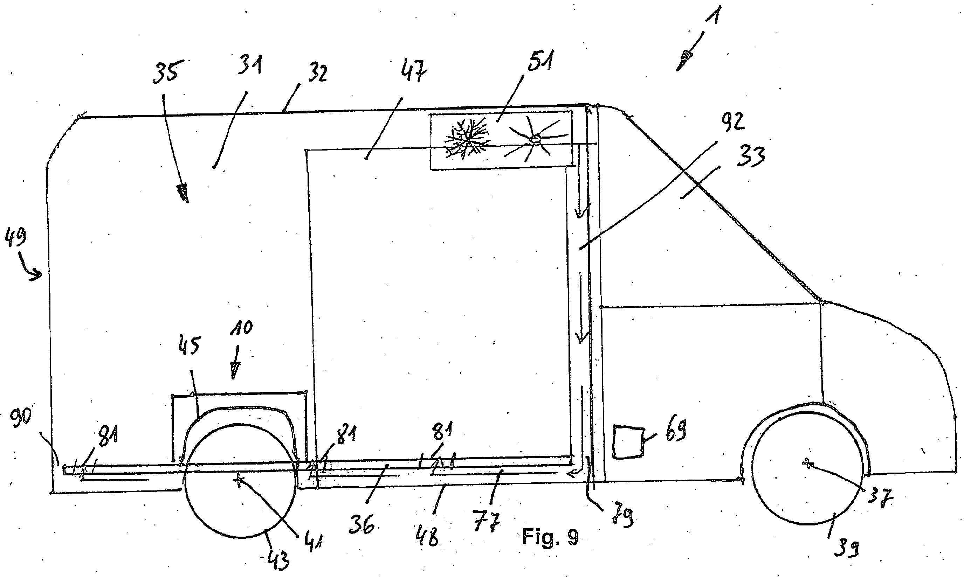

Fig. 9 zeigt eine alternative Ausführungsform der Belüftungseinrichtung des Lageraumbodens. Mittels eine Schachts oder einer Leitung 92 wird temperierte Laderaumluft von dem Kühl-Wärme-Ventilationssystem 51 zur Eintrittsöffnung 79 geleitet und damit der Laderaumboden 36 belüftet.

Die vorliegende Erfindung ist nicht auf die dargestellten Ausführungsvarianten beschränkt. So könnte das Kühl-Wärme-Ventilationssystem seitlich unten im Bereich eines Radkastens bzw. im Bereich beider Radkästen, über den Köpfen von Fahrer und Beifahrer, Auf-Dach oder Unterflur angeordnet sein.

Mit der vorliegenden Erfindung wird somit auf einfache Weise ein Transportfahrzeug geschaffen bei dem mittels einer Radkastenverkleidung 10 die in dem Laderaum des Transportfahrzeugs 1 vorhandene Luft auf wirksame Weise umgewälzt werden kann, wodurch eine Temperaturvergleichmäßigung im Laderaum erzeugt wird und ein vorbestimmter Temperaturbereich, beispielsweise +15 °C bis +25 °C für nicht kühlbedürftige Arzneimittel, sicher gehalten werden kann, was den Betriebsbedingungen der neuen EU-Richtlinie "Good Distribution Practice" zum Transport von Arzneimitteln entspricht. Auch andere verderbliche, jedoch nicht kühlbedürftige Güter, wie Blumen oder Schokolade und Pralinen können mit dem so ausgestatteten Transportfahrzeug sicher transportiert werden. Grundsätzlich schafft die vorliegende Erfindung die Möglichkeit, mit einfachen Mitteln einen Transport von Gütern bei Raumtemperatur sicherzustellen.

Die Wirksamkeit dieser Luftumwälzung hat sich auch unter extremen Betriebsbedingungen, also einerseits bei strengem Frost und häufigem Öffnen der Laderaumtüren in Simulation einer Arzneimittelverteilung an die einzelnen Apotheken, als auch bei extremer Sommerhitze dauerhaft bewährt.

Vorteilhafterweise kann die erfindungsgemäße Radkastenverkleidung auch nachträglich in bereits für derartige Transporte verwendete Fahrzeuge eingebaut werden.

Weiterhin wird mit der vorliegenden Erfindung der Vorteil einer gleichförmigen Luftfeuchtigkeit in dem Laderaum erreicht. Auch wird vorteilhafterweise erreicht, dass Geruchsbildungen in ansonsten nicht oder nicht so belüfteten Bereiches des Laderaums verhindern oder zumindest reduziert werden können.

### Bezugszeichenliste

1 - Radkastenverkleidung
3 - Seitenwand
5 - obere Abdeckwand
7 - vordere Stirnwand
9 - hintere Stirnwand
11 - Lufteintrittsöffnung
13 - Lufteintrittsöffnung
15 - Luftaustrittsöffnung
17 - Lüfter bzw. Ventilator
18 - Lüfterrad
19 - Schrauben
20 - Nabe
21 - Schrauben oder Nägel
22 - Rahmen
23 - Gittereinrichtung
25 - Winkelschiene
31 - Seitenwände
32 - Oberseite bzw. Laderaumdecke
33 - Fahrerzelle
34 - Trennwand
35 - Laderaum
36- Laderaumboden
37 - Vorderachse
38 - Erhöhungen
39 - Vorderräder
40 - Vertiefungen
41 - Hinterachse
43 - Hinterräder
45 - Radkasten
47 - Seitentür
48 - Karosserieboden
49 - Flügeltüren
51 - Temperiereinrichtung mit ventilierender Funktion bzw. Kühl-Wärme-Ventilationssystem
52 - Lüftungsöffnungen
53 - Pfeile
55 - Weg
57 - Pfeil
59 - Klimazusatzeinrichtung
61 - Pfeil
63 - Pfeil
69 - Rußpartikelfilter
71 - Belüftungseinrichtung
73 - Belüftungsgehäuse
74 - Längsseitenwand
75 - Walzenventilator
76 - Abdeckwand
77 - Belüftungskanal
78 - Nägel
79 - Lufteintrittsöffnung
80 - Kanal
81 - Luftaustrittsöffnungen
83 - hintere Stirnwand
85 - vordere Stirnwand
86 - Lufteintrittsöffnung
87 - Winkelschiene
89 - Schraube
90 - Spalt oder Schlitz
92 - Schacht oder Leitung

## Patentansprüche

1. Transportfahrzeug (1) zum Transport von temperatursensiblen Gütern, wie Arzneimittel, Lebensmittel, wie insbesondere Schokolade und Pralinen, Kosmetika oder Pflanzen, oder elektronische Bauteile, welche in einem vorbestimmten konstanten Temperaturbereich, der einen maximalen Bereich von im Wesentlichen +5°C bis +30°C, bevorzugt von im Wesentlichen +15°C bis +25°C umfasst, transportiert werden müssen, mit einer Fahrerzelle (33) und einem geschlossenen Laderaum (35), der durch wenigstens eine verschließbare Öffnung (47, 49) erreichbar und/oder begehbar ist zum Be- und Entladen der Güter, wobei der Laderaum (35) einen Laderaumboden (36), zwei Seitenwände (31), eine Decke bzw. einem Himmel (32), eine vordere Trennwand (34) in Richtung Fahrerzelle und eine Heckwand (49) aufweist, wobei zur Abdeckung der Räder (43) wenigstens einer Hinterachse (41) wenigstens ein Radkasten (45) pro Längsseite des Transportfahrzeugs (1) vorgesehen ist, wobei im Laderaum (35) eine Temperiereinrichtung mit ventilierender Funktion bzw. ein Kühl-Wärme-Ventilationssystem (51) zur Zuführung von temperierter Luft in den Laderaum vorgesehen ist, die bzw. das zur Temperaturregelung der Luft im Laderaum und zu deren Umwälzung dient und die Teil einer Kälte- und Wärmeanlage mit elektronischer Temperaturregelung des Transportfahrzeugs ist,
**dadurch gekennzeichnet,**
**dass** pro Radkasten (45) eine Radkastenverkleidung (10) vorgesehen ist, die eine Seitenwand (3), eine obere Abdeckwand (5), eine vordere Stirnwand (7) und eine hintere Stirnwand (9), wenigstens eine Lufteintrittsöffnung (11, 13) und wenigstens eine Luftaustrittsöffnung (15), und wenigstens einen Lüfter oder Ventilator(17) aufweist, der sich in oder an der wenigstens einen Lufteintrittsöffnung (11, 13) oder an der wenigstens einen Luftaustrittsöffnung (15) befindet und zur Umwälzung der Luft im Laderaum (35) dient.

2. Transportfahrzeug nach Anspruch 1, **dadurch gekennzeichnet, dass** das Kühl-Wärme-Ventilationssystem (51) in der Nähe der Trennwand (34) zwischen Fahrerzelle (33) und Laderaum(35) oder in der Nähe der Heckwand (49) angeordnet ist.

3. Transportfahrzeug nach Anspruch 1 oder 2, bei dem der Laderaum (35) eine rahmenförmige Struktur aufweist mit Verstärkungs- bzw. Tragholmen der Seitenwände (31) und/oder des Himmels (32), **dadurch gekennzeichnet, dass** die rahmenförmige Struktur und die Verstärkungs- bzw. Tragholme von einer Innen-Abdeckung überdeckt sind, wodurch eine glatte Innenfläche der Seitenwände und/oder des Himmels des Laderaums geschaffen wird.

4. Transportfahrzeug nach Anspruch 3, **dadurch gekennzeichnet, dass** zwischen der rahmenförmigen Struktur und der Innen-Abdeckung des Laderaums (35) Wärmedämmmaterial angeordnet ist, wobei bevorzugt auch Hohlräume in den Tragholmen mit Wärmedämmmaterial gefüllt sind.

5. Transportfahrzeug nach einem der Ansprüche 1 bis 4, **dadurch gekennzeichnet, dass** wenigstens eine Luftdruckausgleichsklappe im Laderaum (35) des Transportfahrzeugs vorgesehen ist, welche zum Druckausgleich im Laderaum, insbesondere beim schnellen Schließen der Laderaumtür (47, 49) dient.

6. Transportfahrzeug nach Anspruch 5, **dadurch gekennzeichnet, dass** die Luftdruckausgleichsklappe in Form einer flexiblen Lasche ausgebildet ist.

7. Transportfahrzeug nach einem der Ansprüche 1 bis 6, **dadurch gekennzeichnet, dass** der wenigstens eine Lüfter oder Ventilator (17) der Radkastenverkleidung (10) an der Innenseite der Wand im Bereich der wenigstens einen Luftaustrittsöffnung (15) angeordnet ist, in der sich die wenigstens eine Luftaustrittsöffnung (15) der Radkastenverkleidung (10) befindet.

8. Transportfahrzeug nach einem der Ansprüche 1 bis 7, **dadurch gekennzeichnet, dass** die wenigstens eine Lufteintrittsöffnung (11; 13) in einer der beiden Stirnwände (7, 9) der Radkastenverkleidung (10), in der die Luftaustrittsöffnung (15) nicht angeordnet ist, oder in der oberen Abdeckwand (5) benachbart zu einer der beiden Stirnwände (7, 9), in der die Luftaustrittsöffnung (15) nicht angeordnet ist, angeordnet ist.

9. Transportfahrzeug nach einem der Ansprüche 1 bis 8, **dadurch gekennzeichnet, dass** die wenigstens eine Luftaustrittsöffnung (15) sich so nahe wie möglich an der benachbarten Seitenwand (31) des Transportfahrzeugs befindet.

10. Transportfahrzeug nach einem der Ansprüche 1 bis 9, **dadurch gekennzeichnet, dass** die Radkastenverkleidung (10) eine Mehrzahl von Lufteintritts- und Luftaustrittsöffnungen sowie eine Mehrzahl von Lüftern oder Ventilatoren aufweist.

11. Transportfahrzeug nach einem der Ansprüche 1 bis 10, **dadurch gekennzeichnet, dass** zwischen der wenigstens einen Lufteintrittsöffnung (11; 13) und der wenigstens einen Luftaustrittsöffnung (15) der Radkastenverkleidung (10) eine die Luft führende, rohr- oder schlauchförmige Luftleitung vorgesehen ist, wobei der wenigstens eine Lüfter oder Ventilator sich in der Luftleitung befindet.

12. Transportfahrzeug nach einem der Ansprüche 1 bis 11, **dadurch gekennzeichnet, dass** mittels des wenigstens einen Lüfters oder Ventilators (17) der Radkastenverkleidung (10) eine Umwälzung der Luft im Laderaum (35) von hinten unten nach vorne unten oder von vorne unten nach hinten unten erzeugt wird.

13. Transportfahrzeug nach einem der Ansprüche 1 bis 12, **dadurch gekennzeichnet, dass** die Seitenwand (3), die obere Abdeckwand (5), die vordere Stirnwand (7) und/oder die hintere Stirnwand (9) der Radkastenverkleidung (10) aus einer beschichteten Holzwerkstoffplatte, oder aus Platten aus Vollholz, Kunststoff, wie Duro- oder Thermoplaste, Polypropylen, GfK oder aus Metall gebildet sind.

14. Transportfahrzeug nach einem der Ansprüche 1 bis 13, **dadurch gekennzeichnet, dass** auf dem Karosserieboden des Transportfahrzeugs ein im Wesentlichen ebener Laderaumboden (36) in Form einer oder mehrerer ebener Platten angeordnet ist, wobei entweder der Karosserieboden eine Längssickenstruktur (38, 40) aufweist oder an der Unterseite des Laderaumbodens Abstandsleisten angeordnet sind, wodurch Lüftungskanäle gebildet werden, und dass eine Belüftungseinrichtung (71) zur Belüftung der Lüftungskanäle vorgesehen ist.

15. Transportfahrzeug nach Anspruch 14, **dadurch gekennzeichnet, dass** die Belüftungszufuhr des Laderaumbodens (36) in der Nähe der Trennwand (34) zwischen Fahrerzelle (33) und Laderaum (35) erfolgt.

16. Transportfahrzeug nach Anspruch 14 **dadurch gekennzeichnet, dass** die Belüftungseinrichtung (71) mit der Kälte- und Wärmeanlage (51) des Transportfahrzeugs verbunden ist, wodurch temperierte Luft in die Lüftungskanäle unterhalb des Laderaumbodens (36) einführbar ist.

17. Transportfahrzeug nach einem der Ansprüche 1 bis 16, **dadurch gekennzeichnet, dass** die Radkastenverkleidung (10) mit dem Boden (36) des Laderaums (35) des Kraftfahrzeugs (31), entweder in Form des Karosseriebodens oder in Form des zusätzlichen Laderaumbodens (36), verbunden ist.

18. Transportfahrzeug nach Anspruch 17, **dadurch gekennzeichnet, dass** die Verbindung durch Verkleben mit geeigneten Klebern, durch Abdichten mittels Materialien wie Silikon, Akryl oder dergleichen bzw. auch durch Verwendung von Kompriband, und/oder mittels Bauteilen wie Winkelschienen (25) oder Eckverbinder oder auch durch Formschlussverbindungen wie Nut und Feder, Zunge und zungenförmige Vertiefung und dergleichen erfolgt.

## Claims

1. Transport vehicle (1) for transporting temperature-sensitive goods, as for example pharmaceuticals, foodstuff, as in particular chocolate and pralines, cosmetics or plants, or electronic components, which have to be transported in a predetermined constant temperature range, which includes a maximum range of substantially +5 °C to +30 °C, preferably of substantially +15 °C to +25 °C, with a driver's cab (33) and a closed cargo bay (35), which can be reached and/or accessed via at least one lockable opening (47, 49) for loading and unloading the goods, wherein the cargo bay (35) comprises a cargo bay bottom (36), two side walls (31), a ceiling or roof (32), respectively, a frontal partition wall (34) in the direction of the driver's cab and a rear wall (49), wherein for covering the edges (43) of at least one rear axle (41) at least one wheel case (45) is provided on each longitudinal side of the transport vehicle (1), wherein a temperature device with ventilating function or a cooling-heating-ventilation system (51), respectively, is provided in the cargo bay (35) for feeding tempered air into the cargo bay, which serves for temperature regulation of the air in the cargo bay and for circulation thereof and which is part of a cooling and heating plant with electronic temperature regulation of the transport vehicle,
**characterized in**
**that** a wheel case casing (10) is provided for each wheel case (45), which comprises a side wall (3), an upper cover wall (5), a frontal end wall (7) and a rear end wall (9), at least one air inlet opening (11, 13) and at least one air outlet opening (15) and at least one cooling fan or fan (17), which is arranged in or at the at least one air inlet opening (11, 13) or at the at the least one air outlet opening (15) and which serves for circulation of the air in the cargo bay (35).

2. Transport vehicle according to claim 1, **characterized in that** the cooling-heating-ventilation system (51) is arranged near the partition wall (34) between the driver's cab (33) and the cargo bay (35) or near the rear wall (49).

3. Transport vehicle according to claim 1 or 2, wherein the cargo bay (35) comprises a frame-like structure with reinforcement or supporting bars, respectively, of the side walls (31) and/or of the roof (32), **characterized in that** the frame-like structure and the reinforcement or supporting bars, respectively, are covered by an inner cover, whereby a smooth inner surface of the side walls and/or of the roof of the cargo bay is created.

4. Transport vehicle according to claim 3, **characterized in that** insulating material is arranged between the frame-like structure and the inner cover of the cargo bay (35), wherein preferably also cavities in the supporting bars are filled with insulating material.

5. Transport vehicle according to one of claims 1 to 4, **characterized in that** at least one air pressure compensation flap is provided in the cargo bay (35) of the transport vehicle, which serves for pressure compensation in the cargo bay, in particular during fast closing of the cargo bay door (47, 49).

6. Transport vehicle according to claim 5, **characterized in that** the air pressure compensation flap is designed in the form of a flexible bracket.

7. Transport vehicle according to one of claims 1 to 6, **characterized in that** the at least one cooling fan or fan (17) of the wheel case casing (10) is arranged at the inner side of the wall in the region of the at least one air outlet opening (15), in which the at least one air outlet opening (15) of the wheel case casing is arranged.

8. Transport vehicle according to one of claims 1 to 7, **characterized in that** the at least one air inlet opening (11; 13) is arranged in one of the two end walls (7, 9) of the wheel case casing (10), in which the air outlet opening (15) is not arranged, or in the upper cover wall (5) adjacent to one of the two end walls (7, 9), in which the air outlet opening (15) is not arranged.

9. Transport vehicle according to one of claims 1 to 8, **characterized in that** the at least one air outlet opening (15) is as close as possible to the adjacent side wall (31) of the transport vehicle.

10. Transport vehicle according to one of claims 1 to 9, **characterized in that** the wheel case casing (10) comprises a plurality of air inlet and air outlet openings as well as a plurality of cooling fans or fans.

11. Transport vehicle according to one of claims 1 to 10, **characterized in that** a tubular or hose-like air pipe carrying the air is provided between the at least one air inlet opening (11; 13) and the at least one air outlet opening (15) of the wheel case casing (10), wherein the at least one cooling fan or fan is arranged in the air pipe.

12. Transport vehicle according to one of claims 1 to 11, **characterized in that** a circulation of the air in the cargo bay (35) from the rear down to the front down or from the from down to the rear down is created by means of the at least one cooling fan or fan (17) of the wheel case casing (10).

13. Transport vehicle according to one of claims 1 to 12, **characterized in that** the side wall (3), the upper cover wall (5), the frontal end wall (7) and/or the rear end wall (9) of the wheel case casing (10) are made of a coated wooden composite board or of boards made of solid wood, plastics, as thermosets or thermoplastics, polypropylene, GFRP or metal.

14. Transport vehicle according to one of claims 1 to 13, **characterized in that** a substantially flat cargo bay bottom (36) in the form of one or more flat boards is arranged on the body floor of the transport vehicle, wherein either the body floor comprises a longitudinal suspension structure (38, 40) or distance strips are arranged on the bottom side of the cargo bay bottom, whereby ventilation ducts are formed, and **in that** a venting system (71) for venting the ventilation ducts is provided.

15. Transport vehicle according to claim 14, **characterized in that** the venting supply of the cargo bay bottom (36) is carried out near the partition wall (34) between the driver's cab (33) and the cargo bay (35).

16. Transport vehicle according to claim 14, **characterized in that** the venting system (71) is connected to the cooling-heating-ventilation system (51) of the transport vehicle, whereby tempered air can be supplied in the ventilation ducts below the cargo bay bottom (36).

17. Transport vehicle according to one of claims 1 to 16, **characterized in that** the wheel case casing (10) is connected to the bottom (36) of the cargo bay (35) of the vehicle (31), either in the form of the body floor or in the form of the additional cargo bay bottom (36).

18. Transport vehicle according to claim 17, **characterized in that** the connection is made by means of gluing with suitable glues, by means of sealing with materials like silicone, acryl or the like or also by using compriband, respectively, and/or by means of components like angular rails (25) or corner connectors or also by form-fitting connections like tongue and groove, tongue and tongue-shaped recess and the like.

## Revendications

1. Véhicule de transport (1) pour le transport d'articles sensibles à la température tels que des médicaments, des denrées telles que notamment du chocolat et des pralines, des produits cosmétiques ou des plantes ou des composants électroniques, qui doivent être transportés à une plage de températures constante prédéterminée qui comprend notamment une plage maximale de sensiblement +5 °C à +30 °C, de préférence de sensiblement +15 °C à +25 °C, comprenant une cabine pour le conducteur (33) et un espace de rangement (35) fermé qui est accessible et/ou dans lequel on peut entrer par au moins une ouverture verrouillable (47, 49) pour charger ou décharger les articles, l'espace de rangement (35) comprenant un plancher d'espace de rangement (36), deux parois latérales (31), un plafond ou un ciel (32), une paroi de séparation avant (34) vers la cabine pour le conducteur et une paroi arrière (49), pour recouvrir les roues d'au moins un essieu arrière (41), au moins un passage de roue (45) étant prévu par côté longitudinal du véhicule de transport (1), dans l'espace de rangement (35), un dispositif de régulation de température avec fonction de ventilation ou un système de ventilation à refroidissement et réchauffement (51) étant prévu pour acheminer de l'air tempéré dans l'espace de rangement, lequel dispositif ou système sert à la régulation de température de l'air dans l'espace de rangement et à la recirculation de celui-ci et fait partie d'une installation de refroidissement et de réchauffement avec régulation électronique de la température du véhicule de transport,
**caractérisé en ce que**,
par passage de roue (45), un recouvrement de passage de roue (10) est prévu qui comprend une paroi latérale (3), une paroi de recouvrement supérieure (5), une paroi frontale avant (7) et une paroi frontale arrière (9), au moins une entrée d'air (11, 13) et au moins une sortie d'air (15) et au moins un aérateur ou ventilateur (17) qui est situé dans ou à ladite au moins une entrée d'air (11, 13) ou à ladite au moins une sortie d'air (15) et qui sert à la recirculation de l'air dans l'espace de rangement (35).

2. Véhicule de transport selon la revendication 1, **caractérisé en ce que** le système de ventilation à refroidissement et réchauffement (51) est disposé proche de la paroi de séparation (34) entre la cabine pour le conducteur (33) et l'espace de rangement (35) ou proche de la paroi arrière (49).

3. Véhicule de transport selon la revendication 1 ou 2, dans lequel l'espace de rangement (35) présente une structure en forme de cadre avec des montants de renforcement ou de support des parois latérales (31) et/ou du ciel (32), **caractérisé en ce que** la structure en forme de cadre et les montants de renforcement ou de support sont recouverts d'un recouvrement intérieur, ce par quoi une surface intérieure lisse des parois latérales et/ou du ciel de l'espace de rangement est créée.

4. Véhicule de transport selon la revendication 3, **caractérisé en ce que** du matériau d'isolation thermique est disposé entre la structure en forme de cadre et le recouvrement intérieur de l'espace de rangement (35), de préférence, des espaces creux dans les montants de support étant également remplis de matériau d'isolation thermique.

5. Véhicule de transport selon l'une des revendications 1 à 4, **caractérisé en ce qu'**il est prévu dans l'espace de rangement (35) du véhicule de transport, au moins un clapet de compensation de pression d'air qui sert à effectuer une compensation de pression dans l'espace de rangement, notamment en cas de fermeture rapide de la porte (47, 49) de l'espace de rangement.

6. Véhicule de transport selon la revendication 5, **caractérisé en ce que** le clapet de compensation de pression d'air est réalisé en forme de patte flexible.

7. Véhicule de transport selon l'une des revendications 1 à 6, **caractérisé en ce que** ledit au moins un aérateur ou ventilateur (17) du recouvrement de passage de roue (10) est disposé à proximité de ladite au moins une sortie d'air (15), sur le côté intérieur de la paroi dans laquelle est située ladite au moins une sortie d'air (15) du recouvrement de passage de roue (10).

8. Véhicule de transport selon l'une des revendications 1 à 7, **caractérisé en ce que** ladite au moins une entrée d'air (11 ; 13) est disposée dans une des deux parois frontales (7, 9) du recouvrement de passage de roue (10) dans laquelle la sortie d'air (15) n'est pas disposée ou dans la paroi de recouvrement supérieure (5) avoisinant à une des deux parois frontales (7, 9) dans laquelle la sortie d'air (15) n'est pas disposée.

9. Véhicule de transport selon l'une des revendications 1 à 8, **caractérisé en ce que** ladite au moins une sortie d'air (15) est située le plus proche possible de la paroi latérale (31) avoisinante du véhicule de transport.

10. Véhicule de transport selon l'une des revendications 1 à 9, **caractérisé en ce que** le recouvrement de passage de roue (10) comprend une pluralité d'entrées et de sorties d'air ainsi qu'une pluralité d'aérateurs ou de ventilateurs.

11. Véhicule de transport selon l'une des revendications 1 à 10, **caractérisé en ce qu'**il est prévu, entre ladite au moins une entrée d'air (11 ; 13) et ladite au moins une sortie d'air (15) du recouvrement de passage de roue (10), un conduit d'air en forme de tube ou de tuyau transportant l'air, ledit au moins un aérateur ou ventilateur étant situé dans le conduit d'air.

12. Véhicule de transport selon l'une des revendications 1 à 11, **caractérisé en ce qu'**il est engendré, à l'aide dudit au moins un aérateur ou ventilateur (17) du recouvrement de passage de roue (10), une recirculation de l'air dans l'espace de rangement du bas arrière vers le bas avant ou du bas avant vers le bas arrière.

13. Véhicule de transport selon l'une des revendications 1 à 12, **caractérisé en ce que** la paroi latérale (3), la paroi de recouvrement supérieure (5), la paroi frontale avant (7) et/ou la paroi frontale arrière (9) du recouvrement de passage de roue (10) sont formées par une plaque en matière de bois recouverte ou en des plaques en bois massif, en matière synthétique telles que des matières synthétiques thermodurcissables ou des thermoplastes, du polypropylène, de la matière synthétique renforcée de fibres de verre, ou en métal.

14. Véhicule de transport selon l'une des revendications 1 à 13, **caractérisé en ce qu'**il est disposé sur le plancher de carrosserie du véhicule de transport, un plancher d'espace de rangement sensiblement plan (36) sous la forme d'une ou de plusieurs plaques planes, le plancher de carrosserie présentant une structure de rainures longitudinales (38, 40) ou des lattes d'espacement étant disposées sur la face inférieure du plancher d'espace de rangement, ce par quoi des canaux de ventilation sont formés, et **en ce qu'**il est prévu un dispositif de ventilation (71) pour ventiler les canaux de ventilation.

15. Véhicule de transport selon la revendication 14, **caractérisé en ce que** l'admission d'air de ventilation du plancher d'espace de rangement (36) se fait proche de la paroi de séparation (34) entre la cabine de conducteur (33) et l'espace de rangement (35).

16. Véhicule de transport selon la revendication 14, **caractérisé en ce que** le dispositif de ventilation (71) et relié à une installation de refroidissement et de réchauffement (51) du véhicule de transport, ce qui permet d'introduire de l'air tempéré dans les canaux de ventilation en-dessous du plancher d'espace de rangement (36).

17. Véhicule de transport selon l'une des revendications 1 à 16, **caractérisé en ce que** le recouvrement de passage de roue (10) est relié au plancher (36) de l'espace de rangement (35) du véhicule motorisé (31), soit sous la forme du plancher de carrosserie soit sous la forme du plancher supplémentaire d'espace de rangement (36).

18. Véhicule de transport selon la revendication 17, **caractérisé en ce que** la liaison est effectuée par collage à l'aide de colles appropriées, par étanchement à l'aide de matériaux tels que du silicone, de l'acrylique ou autres, ou encore par utilisation de bandes pré-comprimées et/ou à l'aide de composants tels que des cornières (25) ou des coudes de raccordement ou encore par des liaison à complémentarité de forme telles que tenon et mortaise, languette et enfoncement en forme de languette et semblables.
